# EUROPÄISCHE PATENTSCHRIFT

(11) **EP 1 556 599 B1**
(45) Veröffentlichungstag und Bekanntmachung des Hinweises auf die Patenterteilung: **21.03.2007**
(21) Anmeldenummer: 03773455.5
(22) Anmeldetag: 24.09.2003
(51) Int. Cl.: F02D 9/10, F16K 1/226, F16K 27/02

(54) **GEHÄUSEFLANSCHEINHEIT**
HOUSING FLANGE UNIT
ENSEMBLE BRIDE DE CARTER

(30) Priorität: 31.10.2002 DE 10251179
(43) Veröffentlichungstag der Anmeldung: 27.07.2005
(73) Patentinhaber: SIEMENS AKTIENGESELLSCHAFT, 80333 München (DE)
(72) Erfinder: ANSCHICKS, Rolf, 35510 Butzbach (DE); KRÜGER, Jörg, 60435 Frankfurt (DE)
(86) Internationale Anmeldenummer: PCT/DE2003/003183
(87) Internationale Veröffentlichungsnummer: WO 2004/040109

(56) Entgegenhaltungen:
- DE-A- 3 707 904
- DE-A- 4 019 264
- DE-C- 922 800
- US-A- 5 687 691

## Beschreibung

Die Erfindung bezieht sich auf eine Gehäuseflanscheinheit, die aus einem Gehäuseflansch besteht, in dem senkrecht zur Längsachse des Gehäuseflansches eine Klappenwelle mit einer mittig angeordneten Klappe mit einem ersten Lager und einem zweiten Lager drehbar gelagert ist, die an der Außenseite des ersten Lagers eine kreisförmige Scheibe aufweist, die in einen becherförmigen Sitz des Gehäuseflansches eingreift, sowie auf eine Verwendung der Gehäuseflanscheinheit.

Gehäuseflanscheinheiten sind bekannt. Sie werden in der Regel von Gasen durchströmt und sind mehrteilig aufgebaut. In der Regel weisen sie eine senkrecht zur Längsachse des Gehäuseflansches drehbar gelagerte Klappenwelle auf, auf der eine Klappe zum Verschließen von Rohrleitungseinheiten angeordnet ist. In der Regel ist es dabei gewünscht, dass die Gase nicht über die Lager der Klappenwelle ins Freie gelangen können, besonders dann, wenn die Gase Schadstoffe enthalten. Diese Möglichkeit ist dadurch gegeben, dass die Klappenwelle in der Regel von außen angetrieben wird und eine entsprechende Abdichtung durch Dichtungsringe infolge hoher Temperaturen, denen die Gehäuseflanscheinheit meistens ausgesetzt ist, nicht wirkungsvoll realisiert werden kann. Aus der DE 40 19 264 A1 ist eine Gehäuseeinheit mit den Merkmalen der Gehäuseflanscheinheit gemäß dem Oberbegriff von Anspruch 1 bekannt. Die US-A-5 687 691 zeigt eine Drosselklappenvorrichtung mit einer Gehäuseflanscheinheit.

Der Erfindung liegt daher die Aufgabe zugrunde, eine Gehäuseflanscheinheit zu schaffen, durch welche ein Austritt des strömenden Mediums durch die Lagerung der Klappenwelle auch bei höheren Betriebstemperaturen wirkungsvoll vermieden werden kann.

Die der Erfindung zugrundeliegende Aufgabe wird durch eine Gehäuseflanscheinheit der eingangs genannten Art gelöst, bei welcher zum Abdichten der Klappenwelle (4) im Gehäuseflansch (1) die kreisförmige Scheibe (6) mit der Klappenwelle (2) durch Schweißen fest verbunden oder als Vorsprung der Klappenwelle ausgeführt ist und in dem Gehäuseflansch (1) ein Topf (7) mit kreisförmiger Aussparung fixiert ist, in der die kreisförmige Scheibe (6) eingebettet ist. Als Klappe wird beispielsweise eine kreisförmige Metallscheibe eingesetzt. Bei dem ersten Lager und dem zweiten Lager handelt es sich in besonders vorteilhafter Weise um Lagerhülsen. Die kreisförmige Scheibe liegt senkrecht zur Längsachse der Klappenwelle. Die kreisförmige Scheibe kann dabei beispielsweise durch Schweißen mit der Klappenwelle verbunden sein. Es ist jedoch auch möglich, dass die kreisförmige Scheibe als Vorsprung der Klappenwelle ausgeführt ist und somit mit der Klappenwelle ein Einzelteil bildet. Der becherförmige Sitz des Gehäuseflansches ist beispielsweise kreisförmig ausgebildet. In diesem Fall besteht der Topf aus einem runden Vollmaterial, das an seiner, der Mitte des Gehäuseflansches zugewandten Seite in entsprechender Form ausgespart ist, so dass die kreisförmige Scheibe vollständig in der Aussparung eingebettet werden kann. Es hat sich in überraschender Weise gezeigt, dass ein Ausströmen des strömenden Mediums aus der Gehäuseflanscheinheit auch bei höheren Betriebstemperaturen vermieden werden kann. Dabei kann auf die Anordnung von zusätzlichen Dichtungen verzichtet werden. Die strömenden Medien, beispielsweise Gase, gelangen möglicherweise noch über das erste Lager zur kreisförmigen Scheibe, die in einen becherförmigen Sitz des Gehäuseflansches eingreift. Durch dieses Eingreifen können die strömenden Medien nicht über die kreisförmige Scheibe und den Topf nach außen gelangen.

Eine bevorzugte Ausgestaltung der Erfindung besteht darin, dass das am ersten Lager positionierte Ende der Klappenwelle mit einem Stellantrieb verbunden ist. Auf diese Weise kann die Klappenwelle besonders vorteilhaft in eine Drehbewegung versetzt werden, wobei gleichzeitig sichergestellt ist, dass keine strömenden Medien ins Freie gelangen können.

Gegenstand der Erfindung ist schließlich die Verwendung der Gehäuseflanscheinheit als Verschlusseinheit für einen Gaskühler mit einem Innenkanal, dessen innere Abmessungen mit den äußeren Abmessungen der Klappe unter Einhaltung von Toleranzen übereinstimmen. Die Toleranzen müssen dabei so gewählt werden, dass der Innenkanal durch die Klappe gasdicht verschlossen werden kann. Solche Gaskühler weisen neben dem Innenkanal in der Regel mehrere Außenkanäle für das zu strömende Medium auf. Im Gegensatz zum Innenkanal werden die Außenkanäle des Gaskühlers gekühlt. Durch die Einstellung verschiedener Positionen der Klappe kann der Durchsatz des anströmenden Mediums entsprechend auf die Außenkanäle oder auf den Innenkanal verteilt werden. Die strömenden Medien werden dann durch den Innenkanal geleitet, sofern gewünscht ist, dass sie ihre höheren Temperaturen behalten. Sollen die strömenden Medien hingegen heruntergekühlt werden, so ist es erforderlich, den Innenkanal des Gaskühlers mit der Klappe weitgehend zu verschließen und so die strömenden Medien nahezu vollständig durch die Außenkanäle zu leiten.

Eine besondere Ausgestaltung ist dabei die Verwendung der Gehäuseflanscheinheit als Verschlusseinheit für einen Gaskühler für Abgase eines Kraftfahrzeugs. Gerade bei den Abgasen eines Kraftfahrzeugs ist gewünscht, dass die Abgase nicht durch die Lagerung der Klappenwelle ins Freie gelangen. Ferner ist gewünscht, einen Teil der Abgase auf höherer Temperatur zu halten. Die Aufteilung des Abgasstromes lässt sich durch die Gehäuseflanscheinheit in besonders vorteilhafter Weise einfach realisieren, wobei ein Austreten der Abgase aus der Gehäuseflanscheinheit vermieden wird.

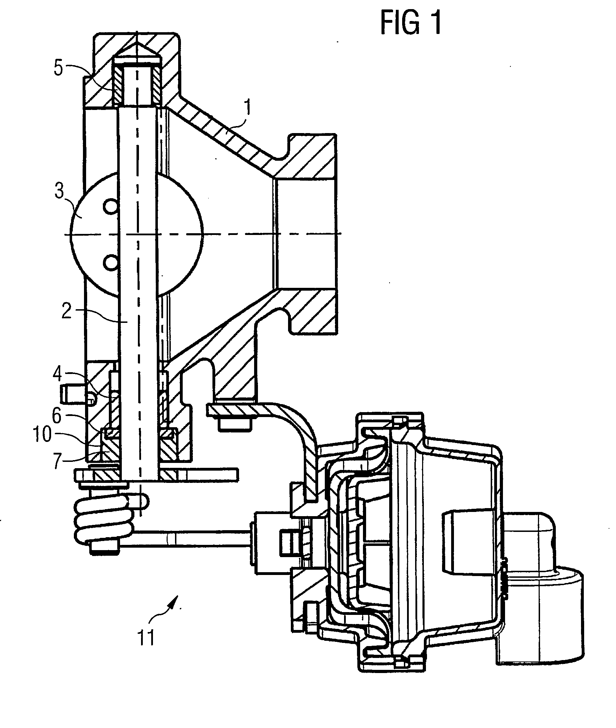

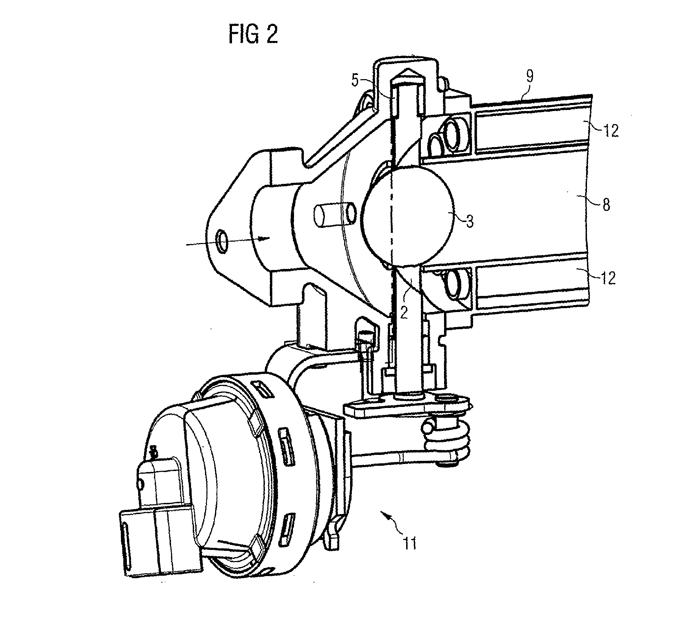

Die Erfindung wird nachfolgend anhand der Zeichnung (Fig. 1, Fig. 2) näher und beispielhaft erläutert.
Fig. 1 zeigt die Gehäuseflanscheinheit im Querschnitt zusammen mit dem Stellantrieb.
Fig. 2 zeigt die perspektivische Darstellung der Gehäuseflanscheinheit mit angeschlossenem Gaskühler.

In Fig. 1 ist die Gehäuseflanscheinheit zusammen mit dem Stellantrieb 11 im Querschnitt dargestellt. Die Gehäuseflanscheinheit besteht aus einem Gehäuseflansch 1, in dem senkrecht zur Längsachse des Gehäuseflansches 1 eine Klappenwelle 2 mit einer mittig angeordneten Klappe 3 mit einem ersten Lager 4 und einem zweiten Lager 5 drehbar gelagert ist. Bei dem ersten Lager 4 und dem zweiten Lager 5 handelt es sich um Lagerhülsen. Die Klappenwelle 2 weist an der Außenseite des ersten Lagers 4 eine kreisförmige Scheibe 6 auf, die mit der Klappenwelle 2 fest verbunden ist. Die Verbindung kann dabei beispielsweise durch Schweißen erfolgen. Die kreisförmige Scheibe 6 greift in einen becherförmigen Sitz 10 des Gehäuseflansches 1 ein. In dem becherförmigen Sitz 10 ist ein Topf 7 mit kreisförmiger Aussparung fixiert. In dieser kreisförmigen Aussparung ist die kreisförmige Scheibe 6 eingebettet. Durch diese Konstruktion wird vermieden, dass strömende Medien, beispielsweise Gase, über das erste Lager 4 und die Klappenwelle 2 ins Freie gelangen können. Das am ersten Lager 4 positionierte Ende der Klappenwelle 2 ist mit einem Stellantrieb 11 verbunden. Durch den Stellantrieb 11 kann die Klappenwelle 2 in eine Drehbewegung versetzt und die Klappe 3 in entsprechender Weise in ihrer Position verändert werden.

In Fig. 2 ist die Gehäuseflanscheinheit in perspektivischer Darstellung mit einem angeschlossenen Gaskühler 9 dargestellt. Der Gaskühler 9 weist einen Innenkanal 8 sowie Außenkanäle 12 auf. Die Gehäuseflanscheinheit dient dabei als Verschlusseinheit für den Gaskühler bezüglich dessen Innenkanals 8. Die inneren Abmessungen des Innenkanals 8 stimmen mit den äußeren Abmessungen der Klappe 3 unter Einhaltung von Toleranzen überein, so dass der Innenkanal 8 des Gaskühlers 9 durch die Klappe 3 vollständig verschlossen werden kann. In diesem Fall (nicht dargestellt) werden die in Pfeilrichtung in die Gehäuseflanscheinheit eingeleiteten strömenden Medien in die Außenkanäle 12 geleitet, die in der Regel mit Kühlwasser umspült werden und die strömenden Medien somit kühlen können. Sofern vorgesehen ist, den größten Teil der strömenden Medien auf einem höheren Temperaturniveau zu halten, ist die Klappe 3 entsprechend zu öffnen, und der Hauptteil der strömenden Medien wird durch den Innenkanal 8 des Gaskühlers 9 geleitet. Die Gehäuseflanscheinheit eignet sich dabei besonders als Verschlusseinheit für einen Gaskühler 9 für Abgase eines Kraftfahrzeuges.

## Patentansprüche

1. Gehäuseflanscheinheit, die aus einem Gehäuseflansch (1) besteht, in dem senkrecht zur Längsachse des Gehäuseflansches (1) eine Klappenwelle (2) mit einer mittig angeordneten Klappe (3) mit einem ersten Lager (4) und einem zweiten Lager (5) drehbar gelagert ist, die an der Außenseite des ersten Lagers (4) eine kreisförmige Scheibe (6) aufweist, die in einen becherförmigen Sitz (10) des Gehäuseflanschesl,(4) eingreift, **dadurch gekennzeichnet, dass** zum Abdichten der Klappenwelle (4) im Gehäuseflansch (1) die kreisförmige Scheibe (6) mit der Klappenwelle (2) durch Schweißen fest verbunden oder als Vorsprung der Klappenwelle ausgeführt ist und dass in dem Gehäuseflansch (1) ein Topf (7) mit kreisförmiger Aussparung fixiert ist, in der die kreisförmige Scheibe (6) eingebettet ist.

2. Gehäuseflanscheinheit nach Anspruch 1, bei dem das am ersten Lager (4) positionierte Ende der Klappenwelle (2) mit einem Stellantrieb (11) verbunden ist.

3. Verwendung der Gehäuseflanscheinheit nach Anspruch 1 oder Anspruch 2 als Verschlusseinheit für einen Gaskühler (9) mit einem Innenkanal (8), dessen innere Abmessungen mit den äußeren Abmessungen der Klappe (3) unter Einhaltung der Toleranzen übereinstimmen.

4. Verwendung nach Anspruch 3 als Verschlusseinheit für einen Gaskühler (9) für Abgases eines Kraftfahrzeugs.

## Claims

1. Housing flange unit which comprises a housing flange (1) in which a butterfly valve shaft (2) having a centrally arranged butterfly valve (3) with a first bearing (4) and a second bearing (5) is mounted rotatably perpendicularly with respect to the longitudinal axis of the housing flange (1) and has, on the outside of the first bearing (4), a circular disk (6) which engages in a cup-shaped seat (10) of the housing flange (1), **characterized in that**, in order to seal the valve shaft (2) in the housing flange (1), the circular disk (6) is firmly connected to the valve shaft (2) by means of welding or is embodied as an extension of the valve shaft, and **in that** a pot-shaped element (7) having a circular recess, in which the circular disk (6) is embedded, is fixed in the housing flange (1).

2. Housing flange unit according to Claim 1, in which that end of the butterfly valve shaft (2) which is positioned on the first bearing (4) is connected to an actuator (11).

3. Use of the housing flange unit according to Claim 1 or Claim 2 as a sealing unit for a gas cooler (9) having an internal passage (8), the internal dimensions of which correspond to the external dimensions of the butterfly valve (3) with the tolerances being complied with.

4. Use according to Claim 3 as a sealing unit for a gas cooler (9) for exhaust gases of a motor vehicle.

## Revendications

1. Ensemble bride de carter, qui se compose d'une bride de carter (1), dans laquelle, perpendiculairement à l'axe longitudinal de la bride de carter (1), un arbre de clapet (2), portant un clapet (3) placé en son centre, est suspendu en rotation sur un premier palier (4) et un deuxième palier (5), ledit arbre de clapet comportant, sur le côté extérieur du premier palier (4), un disque circulaire (6) qui s'insère dans un siège (10) en forme de gobelet de la bride de carter (1), **caractérisé par le fait que**, pour l'étanchéification de l'arbre (2) du clapet dans la bride de carter (1), le disque circulaire (6) est fixé par soudure à l'arbre du clapet (2) ou est exécuté comme épaulement de l'arbre du clapet et que, dans la bride de carter (1), est fixé un pot (7) comportant un évidement circulaire dans lequel s'insère le disque circulaire (6).

2. Ensemble bride de carter selon la revendication 1, dans lequel l'extrémité de l'arbre du clapet (2) positionnée près du premier palier (4) est liée à un mécanisme de commande (11).

3. Utilisation de l'ensemble bride de carter selon la revendication 1 ou la revendication 2, en tant qu'ensemble d'obturation pour un radiateur de gaz (9) comportant un canal intérieur (8), dont les dimensions intérieures concordent avec les dimensions extérieures du clapet (3), tout en respectant des tolérances.

4. Utilisation selon la revendication 3 en tant qu'ensemble d'obturation pour un radiateur (9) de gaz d'échappement d'un véhicule automobile.
